# FASCICULE DE BREVET EUROPEEN

(11) **EP 3 119 556 B1**
(45) Date de publication et mention de la délivrance du brevet: **06.06.2018**
(21) Numéro de dépôt: 15711198.0
(22) Date de dépôt: 20.03.2015
(51) Int. Cl.: B23Q 5/32, F16H 25/20, H02K 7/06, B23B 35/00

(54) **MACHINE D'USINAGE**
WERKZEUGMASCHINE
MACHINE TOOL

(30) Priorité: 20.03.2014 FR 1452350
(43) Date de publication de la demande: 25.01.2017
(73) Titulaire: AMVALOR, 75013 Paris (FR); Advanced Engineering&Innovation, 29590 Malaga (ES)
(72) Inventeur: MORARU, Georges, 13100 Aix-en-Provence (FR); FRANGEARD, Didier, 29007 Malaga (ES)
(74) Mandataire: Lavialle, Bruno François Stéphane
(86) Numéro de dépôt international: PCT/EP2015/056021
(87) Numéro de publication internationale: WO 2015/140334

(56) Documents cités:
- FR-A1- 2 892 959
- GB-A- 2 218 268
- US-A- 5 649 451
- US-A1- 2009 107 308

## Description

### DOMAINE D'APPLICATION DE L'INVENTION

La présente invention a trait au domaine des machines-outils en particulier portatives réalisant les opérations classiques en assemblage aéronautique telles les opérations de perçage et de fraisurage et notamment aux adaptations permettant de réaliser ces opérations dans les meilleures conditions tant du point de vue ergonomique, qualitatif et de productivité.

### DESCRIPTION DE L'ART ANTERIEUR

Une machine de perçage portative comprend généralement un bâti dans lequel un arbre d'entraînement d'un outil est monté pour pivoter autour d'un axe de rotation et se déplacer axialement le long de l'axe de rotation (mouvement d'avance ou de plongée).

Dans la plupart des réalisations, la machine comprend un unique moteur assurant la motorisation du mouvement de rotation et du mouvement d'avance de l'arbre. Des organes de transmission à rapport variable, comportant par exemple des engrenages ou des ensembles poulies/courroies, permettent de mettre en adéquation la vitesse de rotation et la vitesse de déplacement axial de l'outil.

Ces machines d'usinage sont donc cantonnées à des couples vitesse de rotation et vitesse d'avance dont les rapports sont prédéfinis. Ceci peut s'avérer limitant dans certaines conditions d'usinage pour atteindre les performances optimales de la machine. En outre, pour ces configurations classiques, la masse à mettre en mouvement oblige à recourir à des moteurs relativement encombrants.

Dans les machines d'usinage destinées à l'atelier, l'arbre est généralement monté uniquement pour pivoter sur une tête qui elle est montée sur le bâti pour coulisser le long de la direction de plongée. La structure de ces machines est relativement complexe et encombrante.

Certaines configurations de machines de ce type proposent l'ajout d'oscillations axiales à un mouvement d'avance de vitesse constante, afin d'améliorer l'évacuation des copeaux par une fragmentation du copeau. Il existe plusieurs systèmes, basés principalement sur des mécanismes de génération divers, mettant en oeuvre des roulements spéciaux, des engrenages à rapport variable sur un tour ou des actionneurs piézoélectriques. Les principes basés sur des solutions mécaniques sont caractérisés par le fait que l'amplitude des oscillations est soit fixe (prédéfinie par la conception) soit modifiable, mais difficilement, hors processus d'usinage. Quoi qu'il en soit, la fréquence de ces oscillations est, quant à elle, toujours liée par un rapport fixe à la vitesse de rotation (nombre d'oscillations par tour, figé à la conception).

Il existe également dans l'art antérieur le système décrit par le document GB2218268 qui propose un dispositif de taraudage qui comprend deux moteurs coaxiaux entrainant une broche via une liaison glissière et en translation via une liaison hélicoïdale.

Un dispositif quasi équivalent est décrit dans le document US5649451 qui complète un peu l'enseignement du document précèdent pour ce qui concerne la superposition sur un même tronçon d'arbre des moyens de réaliser une liaison glissière et une liaison hélicoïdale.

Ces dispositifs restent néanmoins assez peu performants.

### OBJET DE L'INVENTION

Partant de cet état de fait, la demanderesse a mené des recherches visant à proposer une machine-outil, à énergie électrique, susceptible de réaliser les opérations classiques de perçage et fraisurage en regroupant les ensembles fonctionnels permettant de les mettre en oeuvre tout en respectant des contraintes d'encombrement, de compacité, de rigidité et de masse nécessaire à une utilisation pour réalisation de ces opérations dans des conditions optimales, de préférence en une seule passe avec le niveau de qualité communément requis par exemple dans l'industrie aéronautique.

La demanderesse s'est également efforcée d'améliorer la maîtrise des vitesses, des accélérations et des jerks de réalisation des différentes opérations.

### BREVE DESCRIPTION DE L'INVENTION

A cet effet, on prévoit, selon l'invention, une machine d'usinage comprenant un bâti dans lequel un arbre d'entraînement d'un outil est monté pour pivoter autour d'un axe de rotation et se déplacer axialement le long de l'axe de rotation. L'arbre est relié à deux moteurs rotatifs à savoir un premier moteur relié à un organe d'engrènement avec un tronçon cannelé de l'arbre pour entraîner l'arbre en rotation et un deuxième moteur relié à un écrou engagé sur un tronçon fileté de l'arbre pour déplacer axialement l'arbre. Le premier moteur et le deuxième moteur sont coaxiaux l'un à l'autre et reliés à une unité de commande reliée à des capteurs de position des rotors des moteurs et agencée pour piloter les moteurs de manière à engendrer un déplacement axial de vitesse constante de l'arbre d'entraînement et superposer à ce déplacement axial des oscillations axiales ayant une amplitude et une fréquence propres à fragmenter les copeaux, l'unité de commande étant agencée pour autoriser une modification en temps réel de l'amplitude et de la fréquence de ses oscillations.

Cette architecture mécanique couplée à une unité de commande reliée à des capteurs de position des rotors des moteurs permet de déterminer, en temps réel et de façon synchronisée, la position angulaire et les paramètres électriques des deux moteurs et ce indépendamment l'un de l'autre. Cela permet de piloter ces deux moteurs dépendamment l'un de l'autre, en particulier pour superposer au déplacement axial de vitesse constante de l'arbre d'entraînement, des oscillations axiales d'amplitude et fréquence capables de fragmenter les copeaux avec la possibilité de modifier, en temps réel pendant le processus d'usinage, l'amplitude et la fréquence des oscillations.

L'unité de commande et les capteurs de position des rotors des moteurs permettent de détecter de façon indépendante, et à chaque instant, la position et la vitesse de chacun de ces deux moteurs et de piloter ceux-ci en conséquence. La vitesse de rotation et la vitesse de déplacement axial sont réglables indépendamment l'une de l'autre au moyen de chaque moteur dont l'agencement coaxial assure une compacité relative de la machine.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique partielle, en coupe axiale, d'une machine selon un premier mode de réalisation de l'invention ;
- la figure 2 est une vue analogue à la figure 1 d'une machine selon une variante du premier mode de réalisation ;
- la figure 3 est une vue analogue à la figure 1 d'une machine selon un deuxième mode de réalisation de l'invention.

En référence aux figures, l'invention est ici décrite en application à une machine d'usinage de pièces et ici plus particulièrement de perçage et de fraisurage.

La machine comporte un bâti 1 qui n'est représenté que partiellement ici. Le bâti 1 comprend, de manière connue en elle-même, une structure porteuse pour reposer sur le sol et une table sur laquelle la pièce à usiner est destinée à être fixée par exemple au moyen d'un montage d'usinage.

Un arbre 2 d'entraînement d'un outil est monté dans le bâti pour avoir une extrémité qui s'étend au voisinage de la table et qui est pourvue de moyens de fixation de l'outil. Ces moyens de fixation sont connus en eux-mêmes. L'outil est par exemple monté sur une extrémité de l'arbre d'entraînement par une liaison vis/écrou.

L'arbre 2 est monté pour pivoter autour d'un axe de rotation 3 et se déplacer axialement le long de l'axe de rotation 3.

L'arbre 2 est relié à deux moteurs électriques rotatifs à savoir un premier moteur 10 pour l'entraînement en rotation et un deuxième moteur 20 pour le déplacement axial. Plus précisément, le moteur 10 a un rotor solidaire en rotation d'un organe d'accouplement 11 agencé pour être en liaison glissière avec un tronçon cannelé 2.1 de l'arbre 2 pour entraîner l'arbre en rotation. L'organe d'accouplement 11 est par exemple un manchon intérieurement cannelé. Le moteur 20 a un rotor solidaire en rotation d'un écrou 21 engagé sur un tronçon fileté 2.2 de l'arbre 2 formant ainsi une liaison hélicoïdale pour déplacer axialement l'arbre 2 lorsqu'on impose une vitesse relative entre l'organe d'accouplement 11 et l'écrou 21, c'est-à-dire qu'on fait tourner à des vitesses différentes les deux éléments. Avantageusement, l'outil étant de forme au moins partiellement hélicoïdale, ici un foret, la liaison hélicoïdale et l'outil ont des pas de même sens.

Le moteur 10 et le moteur 20 sont coaxiaux l'un à l'autre, ce qui permet d'obtenir une structure plus compacte que les configurations existantes et de minimiser les inerties, et sont reliés à au moins une unité de commande, symbolisée en 4, agencée pour piloter les moteurs.

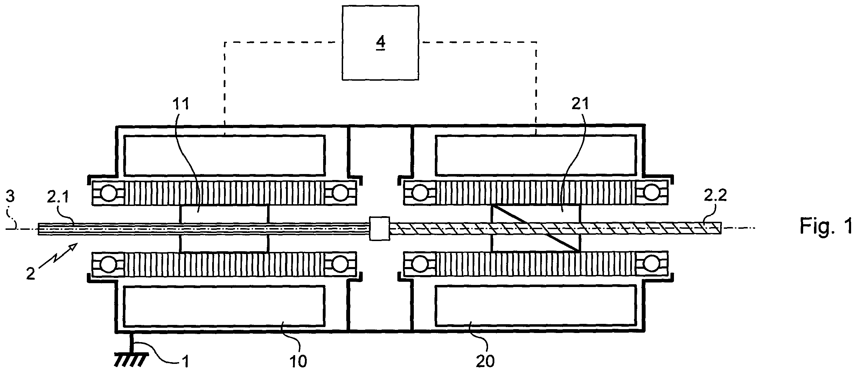

En référence plus particulièrement à la figure 1 et selon le premier mode de réalisation de l'invention, l'arbre est agencé de telle manière que le tronçon cannelé 2.1 et le tronçon fileté 2.2 soient distincts et se succèdent le long de l'axe de rotation. Les deux tronçons sont ici reliés l'un à l'autre par une douille de liaison fixée aux extrémités adjacentes respectives du tronçon cannelé 2.1 et du tronçon fileté 2.2. La course de l'outil est donc limitée à une longueur égale à la distance entre l'organe d'accouplement 11 et l'écrou 21, moins la longueur de la douille de liaison.

Le moteur 10 et le moteur 20 sont coaxiaux à l'arbre 2 et sont traversés par celui-ci : le moteur 10, et plus particulièrement son rotor, s'étend autour d'une portion du tronçon cannelé 2.1 et le moteur 20, et plus particulièrement son rotor, s'étend autour d'une portion du tronçon fileté 2.2.

L'utilisation de deux moteurs indépendants permet d'avoir une machine présentant un encombrement et une masse plus faibles. La machine peut donc être conçue pour être portative ou embarquée sur un bras de robot.

La machine comprend également deux capteurs de position des rotors des moteurs 10, 20. Ces capteurs sont ici des codeurs angulaires, plus particulièrement magnétiques, composés de deux parties distinctes, à savoir un anneau magnétique de haute précision associé à une tête de lecture de type sans contact. Les anneaux sont liés en rotation aux rotors des moteurs et les têtes de lecture sont solidaires des stators. Les capteurs sont reliés à l'unité de commande 4. Les anneaux magnétiques et les têtes de lecture sont par exemple ceux des séries LM et MR commercialisés par la société RLS.

L'agencement mécanique très rigide des arbres et des moteurs avec les deux capteurs de positions permet d'interagir précisément et en temps réel sur le pilotage des moteurs. A cette fin, l'unité de commande met en oeuvre une boucle d'anticipation de trajectoire, ou une boucle de contre-réaction, ou bien encore les deux. L'unité de commande est agencée pour commander les moteurs 10 et 20 pour adapter, de préférence en temps réel, le déplacement axial et/ou le mouvement de rotation en fonction des conditions d'usinage. Les conditions d'usinage (vitesse de rotation et avance) sont déterminées en temps réel et en permanence par la mesure des positions et vitesses des deux axes : en cas de décalage avec des consignes d'usinage, l'unité de commande compense sur l'un des axes ou bien sur les deux pour atteindre les consignes d'usinage.

L'unité de commande peut avantageusement être programmée pour commander les moteurs 10 et 20 de manière à provoquer une oscillation de l'outil notamment le long de la direction axiale de celui-ci. Il en résulte la création de vibrations qui améliorent l'efficacité du perçage. L'unité de commande est avantageusement agencée de manière à autoriser une modification en temps réel des paramètres des oscillations (amplitude et fréquence des oscillations). Selon un premier exemple d'usinage d'une pièce d'un même matériau, les conditions d'usinage (amplitude et fréquence des oscillations) sont déterminées en temps réel et en permanence par la mesure des positions et vitesses de l'arbre par rapport deux axes (position et vitesse angulaires, position et vitesse linéaires) : en cas de décalage avec des consignes d'usinage favorables à la fragmentation des copeaux dans le matériau, l'unité de commande compense sur l'un des axes ou bien sur les deux pour atteindre les consignes. Dans un deuxième exemple d'usinage d'une pièce constituée successivement de deux matériaux ayant des comportements différents en matière de formation de copeaux, on veut modifier les conditions d'usinage lors du changement de matériau pour continuer à fragmenter les copeaux. Pour ce faire, l'unité de commande change les paramètres de pilotage des moteurs pour les adapter le mieux possible au matériau considéré. Ce changement se fait soit par programmation en prenant en compte la position linéaire de l'arbre sur l'axe d'avance (à partir de la position des deux axes en temps réel durant tout le processus et de tenir compte de la position relative des deux matériaux dans la pièce à usiner) soit par détection et traitement des courants moteurs (augmentation ou diminution de l'effort de coupe en fonction des propriétés physiques des deux matériaux) qui vont déterminer le changement des conditions d'usinage.

Plus précisément, l'unité de commande est agencée pour commander le déplacement axial de l'arbre d'entraînement selon l'un au moins des modes suivant :
- déplacement axial à vitesse constante ;
- déplacement axial à oscillations superposées à une valeur constante.

Les oscillations sont par exemple de forme sinusoïdale ou autre, définie pour favoriser une fragmentation des copeaux.

L'unité de commande est également agencée pour déterminer des paramètres électriques des moteurs et déterminer des conditions d'usinage à partir de ces paramètres. La détermination est par exemple effectuée par mesure ou calcul. Les conditions d'usinage sont par exemple déduites du couple fourni par les moteurs à partir du courant d'alimentation de celui-ci. Il n'est donc pas nécessaire de recourir à des capteurs extérieurs même si cela est envisageable pour augmenter les fonctionnalités de la machine.

L'unité de commande est en outre agencée pour déterminer et comparer des vitesses des moteurs : si en cours d'usinage, alors qu'une avance de l'outil est commandée, les deux moteurs se mettent à tourner à la même vitesse, l'unité de commande signale un bris de l'outil (car dans ce cas, l'outil ne peut plus avancer).

L'unité de commande est agencée pour déterminer des paramètres électriques des moteurs et en déduire la position effective de la pièce à usiner. Pour ce faire, les courants des deux moteurs sont mesurés et traités mathématiquement en temps réel pour associer la montée de ces courants à la position axiale de l'outil de coupe. En effet, lorsque l'outil de coupe rencontre la pièce à usiner l'effort résistant au mouvement de l'outil croît et engendre une augmentation du courant nécessaire à l'alimentation des moteurs en vue de maintenir le mouvement de l'outil de coupe.

Lorsque l'outil est monté sur une extrémité de l'arbre d'entraînement par une liaison vis/écrou, l'unité de commande est agencée pour piloter les moteurs lors des changements d'outil pour assurer le montage ou le démontage de l'outil vis-à-vis de l'arbre d'entraînement 2.

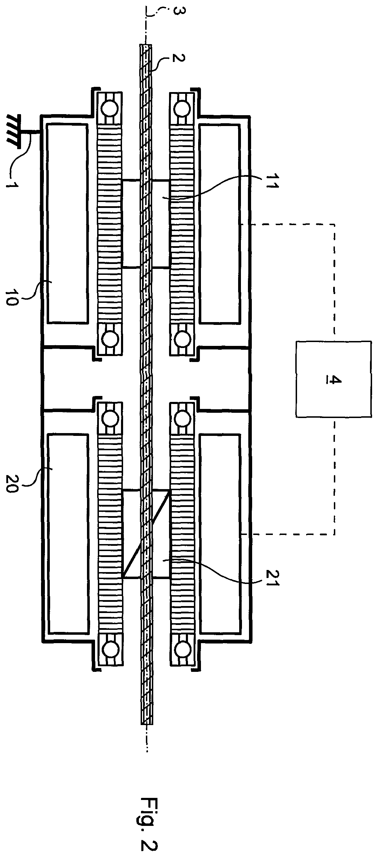

Dans la variante de la figure 2, le tronçon cannelé et le tronçon fileté s'étendent au moins en partie sur une longueur commune de l'arbre et plus précisément ici sur toute la longueur de l'arbre 2.

Le reste de la machine est identique à ce qui a été précédemment décrit en relation avec la figure 1.

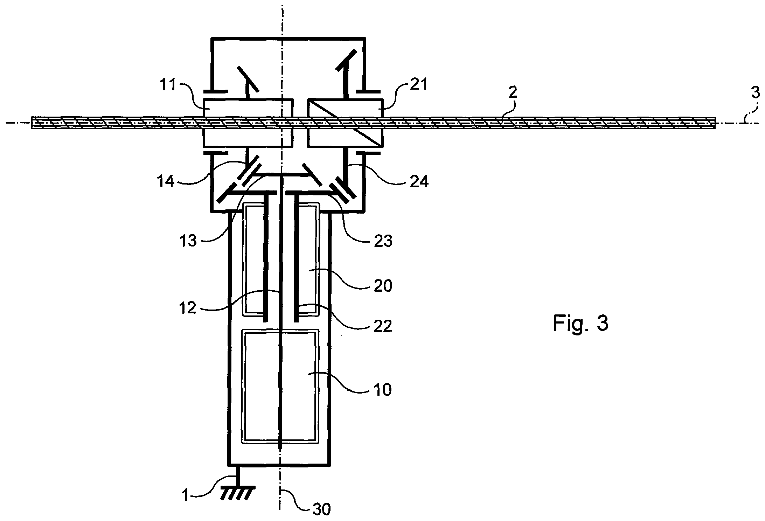

La course de l'outil est donc limitée ici à la longueur de l'arbre 2 moins la distance entre les extrémités opposées de l'organe d'accouplement 11 et de l'écrou 21. Les éléments identiques ou analogues à ceux précédemment décrits porteront la même référence numérique que ceux-ci dans la description qui suit du deuxième mode de réalisation en référence à la figure 3.

Dans ce mode de réalisation, les moteurs 10 et 20 ne sont plus coaxiaux à l'arbre 2 mais restent coaxiaux l'un à l'autre le long d'un axe 30 incliné par rapport à l'axe de rotation 2. L'axe 30 est ici plus précisément perpendiculaire à l'axe 2 dans le mode de réalisation particulier présenté.

Le rotor du moteur 10 entraîne un arbre de sortie 12 entraînant une roue dentée conique 13 engrenant avec une roue dentée conique 14 dont est solidaire en rotation l'organe d'accouplement 11 engagé sur les cannelures de l'arbre 2.

Le rotor du moteur 20 a ici la forme d'un arbre tubulaire 22 qui s'étend coaxialement autour de l'arbre de sortie 12. Le rotor du moteur 10 entraîne une roue dentée conique 23 engrenant avec une roue dentée conique 24 dont est solidaire en rotation l'écrou 21 engagé sur le filetage de l'arbre 2.

Bien entendu, l'invention n'est pas limitée aux modes de réalisation décrits mais englobe toute variante entrant dans le champ de l'invention telle que définie par les revendications.

En particulier, l'arbre peut avoir une structure différente de celle décrite : le tronçon fileté et le tronçon cannelé peuvent être issus de matière ou être rapportés l'un sur l'autre.

La liaison glissière peut être obtenue par d'autres moyens que ceux décrits et notamment un arbre prismatique reçue à coulissement dans un logement de forme complémentaire ménagé dans l'élément d'accouplement.

L'arbre peut être relié à l'outil de manière indirecte, à l'une ou l'autre de ses extrémités.

Seules les parties de la machine concernées par l'invention ont été décrites : la machine peut en outre comprendre notamment des moyens de lubrification en centre d'outil, des moyens de changement d'outil, des moyens de chargement et déchargement des pièces à usiner...

L'invention est applicable à d'autre type de machine d'usinage que les machines de perçage et par exemple des machines de fraisage.

En variante, la liaison hélicoïdale et l'outil ont des pas de sens contraire, de manière à faciliter la réalisation d'un cycle de retour rapide de l'outil.

D'autres capteurs ou moyens de détection que ceux mentionnés sont utilisables et notamment des codeurs optiques.

## Revendications

1. Machine d'usinage comprenant un bâti (1) dans lequel un arbre (2) d'entraînement d'un outil est monté pour pivoter autour d'un axe de rotation (3) et se déplacer axialement le long de l'axe de rotation, l'arbre (2) étant relié à deux moteurs rotatifs (10 ; 20) à savoir un premier moteur (10) relié à un organe d'accouplement (11) en liaison glissière avec un premier tronçon (2.1) de l'arbre pour entraîner l'arbre en rotation et un deuxième moteur (20) relié à un écrou (21) en liaison hélicoïdale avec un deuxième tronçon (2.2) de l'arbre pour déplacer axialement l'arbre, le premier moteur (10) et le deuxième moteur (20) étant coaxiaux l'un à l'autre et reliés à une unité de commande (4), la machine d'usinage étant **caractérisée en ce que** l'unité de commande est reliée à des capteurs de position des rotors des moteurs et agencée pour piloter les moteurs de manière à engendrer un déplacement axial de vitesse constante de l'arbre d'entraînement et superposer à ce déplacement axial des oscillations axiales ayant une amplitude et une fréquence propres à fragmenter les copeaux, l'unité de commande étant agencée pour autoriser une modification en temps réel de l'amplitude et de la fréquence de ses oscillations.

2. Machine selon la revendication 1, dans laquelle les oscillations ont une forme d'onde sinusoïdale ou trapézoïdale ou en dents de scie.

3. Machine selon la revendication 1, dans laquelle l'unité de commande (4) est agencée pour déterminer des paramètres électriques des moteurs (10 ; 20) et déterminer des conditions d'usinage à partir de ces paramètres.

4. Machine selon la revendication 1, dans laquelle l'unité de commande (4) est agencée pour déterminer des paramètres électriques des moteurs (10 ; 20) et en déduire la position effective de la pièce à usiner.

5. Machine selon la revendication 1, dans laquelle l'unité de commande (4) est agencée pour déterminer et comparer des vitesses des moteurs (10 ; 20) pour détecter une défaillance de la machine ou de l'outil de coupe.

6. Machine selon la revendication 1, dans laquelle l'outil étant de forme au moins partiellement hélicoïdale, la liaison hélicoïdale et l'outil ont des pas de sens contraire, de manière à faciliter la réalisation d'un cycle de retour rapide de l'outil.

7. Machine selon la revendication 1, dans laquelle l'unité de commande (4) est agencée pour modifier les oscillations en fonction des conditions d'usinage déterminées en temps réel et en permanence par mesure des positions et vitesses de l'arbre (2) par rapport aux deux axes : en cas de décalage avec des consignes prédéterminées d'usinage favorables à la fragmentation des copeaux, l'unité de commande pilote les moteurs pour compenser le décalage.

8. Machine selon la revendication 1, pour l'usinage d'une pièce constituée successivement de deux matériaux ayant des comportements différents en matière de formation de copeaux, dans laquelle l'unité de commande (4) est agencée pour modifier les oscillations lors du changement de matériau pour continuer à fragmenter les copeaux en changeant les paramètres de pilotage des moteurs pour les adapter le mieux possible au matériau usiné.

9. Machine selon la revendication 1, dans laquelle le changement se fait par programmation en prenant en compte de la position de l'arbre (2) par rapport aux deux axes et de la position relative des deux matériaux dans la pièce à usiner.

10. Machine selon la revendication 1, dans laquelle le changement se fait par détection et traitement des courants moteurs pour provoquer le changement des paramètres de pilotage en fonction d'une augmentation ou diminution des courants moteurs représentative d'une augmentation ou diminution de l'effort de coupe.

## Patentansprüche

1. Werkzeugmaschine, umfassend ein Gestell (1), in dem eine Antriebswelle (2) zum Antrieb eines Werkzeugs gelagert ist, um sich um eine Drehachse (3) zu drehen und sich entlang der Drehachse axial zu verschieben, wobei die Welle (2) mit zwei Drehmotoren (10; 20) verbunden ist, nämlich einem ersten Motor (10), der mit einem Kopplungselement (11) zur Kopplung durch eine Gleitverbindung mit einem ersten Abschnitt (2.1) der Welle verbunden ist, um die Welle in Drehung anzutreiben, und einem zweiten Motor (20), der mit einer Mutter (21) durch eine Schraubverbindung mit einem zweiten Abschnitt (2.2) der Welle verbunden ist, um die Welle axial zu verschieben, wobei der erste Motor (10) und der zweite Motor (20) koaxial zueinander und mit einer Steuereinheit (4) verbunden sind, wobei die Werkzeugmaschine dadurch gekennzeichnen ist, dass die Steuereinheit mit Positionssensoren zur Positionserfassung von Motoren der Motoren verbunden und so ausgebildet ist, dass sie die Motoren derart steuert, dass sie eine axiale Verschiebung mit konstanter Geschwindigkeit der Antriebswelle erzeugt und dieser axialen Verschiebung axiale Schwingungen überlagert, die eine Amplitude und eine Frequenz haben, die geeignet sind, die Späne zu zerkleinern, wobei die Steuereinheit so ausgebildet ist, dass sie eine Änderung der Amplitude und der Frequenz dieser Schwingungen in Echtzeit gestattet.

2. Maschine nach Anspruch 1, bei der die Schwingungen eine sinusförmige, trapezförmige oder sägezahnförmige Wellenform haben.

3. Maschine nach Anspruch 1, bei der die Steuereinheit (4) so ausgebildet ist, dass sie elektrische Parameter der Motoren (10; 20) bestimmt und anhand dieser Parameter Bearbeitungsbedingungen bestimmt.

4. Maschine nach Anspruch 1, bei der die Steuereinheit (4) so ausgebildet ist, dass sie elektrische Parameter der Motoren (10; 20) bestimmt und daraus die effektive Position des zu bearbeitenden Werkstücks ableitet.

5. Maschine nach Anspruch 1, bei der die Steuereinheit (4) so ausgebildet ist, dass sie die Geschwindigkeiten der Motoren (10; 20) bestimmt und vergleicht, um eine Störung der Maschine oder des Schneidwerkzeugs zu erfassen.

6. Maschine nach Anspruch 1, bei der unter Berücksichtigung, dass das Werkzeug eine zumindest teilweise schraubenförmige Form hat, die schraubenförmige Verbindung und das Werkzeug gegenläufige Gewindegänge haben, um so die Umsetzung eines schnellen Rücklaufzyklus des Werkzeugs zu erleichtern.

7. Maschine nach Anspruch 1, bei der die Steuereinheit (4) so ausgebildet ist, dass sie die Schwingungen in Abhängigkeit der in Echtzeit bestimmten Bearbeitungsbedingungen und laufend durch Messen der Positionen und Geschwindigkeiten der Welle (2) in Bezug auf die beiden Achsen ändert: im Falle einer Diskrepanz mit vorgegebenen Bearbeitungssollwerten, die günstig für die Zerkleinerung von Spänen sind, steuert die Steuereinheit die Motoren, um die Diskrepanz zu auszugleichen.

8. Maschine nach Anspruch 1, für die Bearbeitung eines Werkstücks, das nacheinander aus zwei Materialien besteht, die ein unterschiedliches Materialverhalten in Bezug auf die Spanbildung haben, bei der die Steuereinheit (4) so ausgebildet ist, dass sie die Schwingungen während des Wechsels des Material ändert, um die Späne weiter zu zerkleinern, indem die Parameter zum Steuern der Motoren verändert werden, um sie bestmöglich an das bearbeitete Material anzupassen.

9. Maschine nach Anspruch 1, bei der der Wechsel durch Programmierung erfolgt, indem die Position der Welle (2) in Bezug auf die beiden Achsen und die relative Position der beiden Materialien in dem zu bearbeitenden Werkstück berücksichtigt wird.

10. Maschine nach Anspruch 1, bei der der Wechsel durch Erfassen und Verarbeiten von Motorströmen erfolgt, um den Wechsel von Steuerparametern in Abhängigkeit von einer Erhöhung oder Reduzierung der Motorströme zu verursachen, die repräsentativ für eine Erhöhung oder Reduzierung der Schneidkraft ist.

## Claims

1. A machining tool comprising a frame (1), a drive shaft (2) of a tool being mounted therein so as to pivot about an axis of rotation (3) and to move axially along the axis of rotation, the shaft (2) being connected to two rotary motors (10 ; 20), namely a first motor (10) connected to a member (11) for coupling by a sliding connection with a first section (2.1) of the shaft in order to drive the shaft in rotation and a second motor (20) connected to a nut (21) by a helicoidal connection with a second section (2.2) of the shaft in order to move the shaft axially, the first motor and the second motor being coaxial with one another and connected to a control unit, the machining tool being **characterized in that** the control unit is connected to position sensors of the rotors of the motors and designed to control the motors so as to produce an axial displacement at constant speed of the drive shaft and to superpose onto this axial displacement axial oscillations having an amplitude and a frequency capable of chip fragmentation, the control unit being designed to permit a modification in real time of the amplitude and the frequency of its oscillations.

2. The machine as claimed in claim 1, wherein the oscillations have a waveform which is sinusoidal or trapezoidal or saw-tooth-shaped.

3. The machine as claimed in claim 1, wherein the control unit (4) is designed to determine the electrical parameters of the motors (10 ; 20) and to determine the machining conditions from these parameters.

4. The machine as claimed in claim 1, wherein the control unit (4) is designed to determine the electrical parameters of the motors (10 ; 20) and to deduce therefrom the effective position of the part to be machined.

5. The machine as claimed in claim 1, wherein the control unit (4) is designed to determine and compare the speeds of the motors (10 ; 20) to detect a fault in the machine or the cutting tool.

6. The machine as claimed in claim 1, wherein since the tool has a shape which is at least partially helicoidal, the helicoidal connection and the tool have pitches in opposing directions, so as to facilitate the implementation of a rapid return cycle of the tool.

7. The machine as claimed in claim 1, wherein the control unit (4) is designed to modify the oscillations as a function of the machining conditions determined in real time and continuously by measuring the positions and speeds of the shaft (2) relative to the two axes: in the case of a discrepancy with predetermined machining reference values which are favorable to chip fragmentation, the control unit controls the motors to make an adjustment for the discrepancy.

8. The machine as claimed in claim 1, for the machining of a part consisting of two materials arranged in succession and having different behavior in terms of chip formation, wherein the control unit (4) is designed to modify the oscillations when the material changes, in order to continue with the chip fragmentation by changing the control parameters of the motors in order to adapt said parameters in an optimum manner to the machined material.

9. The machine as claimed in claim 1, wherein the change is carried out by programming, taking into account the position of the shaft (2) relative to the two axes and the relative position of the two materials in the part to be machined.

10. The machine as claimed in claim 1, wherein the change is carried out by detecting and processing motor currents to cause the change of control parameters, as a function of an increase or reduction in the motor currents representing an increase or reduction in the cutting force.
